# EUROPÄISCHE PATENTSCHRIFT

(11) **EP 3 244 008 B1**
(45) Veröffentlichungstag und Bekanntmachung des Hinweises auf die Patenterteilung: **08.08.2018**
(21) Anmeldenummer: 17169951.5
(22) Anmeldetag: 08.05.2017
(51) Int. Cl.: F01D 5/16, F01D 5/26, F04D 29/66, F16F 7/10

(54) **IMPULSKÖRPERMODUL FÜR EINE STRÖMUNGSMASCHINE UND ZUGEHÖRIGES HERSTELLUNGSVERFAHREN**
IMPULSE BODY MODULE FOR A TURBOMACHINE AND CORRESPONDING MANUFACTURING METHOD
MODULE DE CORPS D'IMPULSION POUR UNE TURBOMACHINE ET PROCÉDÉ DE FABRICATION ASSOCIÉ

(30) Priorität: 09.05.2016 DE 102016207874
(43) Veröffentlichungstag der Anmeldung: 15.11.2017
(73) Patentinhaber: MTU Aero Engines AG, 80995 München (DE)
(72) Erfinder: Rösele, Gerhard-Heinz, 86551 Aichach (DE); Schlemmer, Markus, 84048 Mainburg / Sandelzhausen (DE); Hartung, Andreas, 81829 München (DE)

(56) Entgegenhaltungen:
- WO-A1-2012/095067
- US-A1- 2002 030 315

## Beschreibung

Die vorliegende Erfindung betrifft ein Impulskörpermodul für eine Komponente einer Strömungsmaschine, insbesondere für eine Turbinenstufe einer Gasturbine, vorzugsweise eine Fluggasturbine.

Schaufelanordnungen, insbesondere Laufschaufelanordnungen, von Gasturbinen neigen aufgrund ihrer Elastizität und Anregung durch das sie umströmende Arbeitsfluid bzw. Gas und durch Vibrationen, zu Schwingungen. Dabei können Eigenfrequenzen der Schaufeln angeregt werden, wobei dabei entstehende Resonanzen zu einer Beschädigung der Gasturbine, insbesondere der Schaufelanordnung führen können.

Die Anmelderin hat zur Dämpfung, insbesondere zur sogenannten Verstimmung von Schwingungen gegenüber bisher üblichen dissipativen Reibdämpfern ein in der WO 2012/095067A1 offenbartes Konzept vorgeschlagen, bei dem Impulskörper in einer Laufschaufel die Schwingungen durch Stoßkontakte beeinflussen, insbesondere wenn die Frequenz nahezu die Eigenfrequenz erreicht. Das in dem oben erwähnten Dokument offenbarte Impulskörpermodul besteht aus mehreren zylinderförmigen und scheibenförmigen Elementen, die in Längsrichtung zusammengesetzt und befestigt werden, um so ein geschlossenes Impulskörpermodul mit mehreren voneinander getrennten Hohlräumen zu bilden. Ferner hat die Anmelderin auch Konzepte für Gehäuse erarbeitet, in denen mehrere Impulskörper aufgenommen sind, und das Gehäuse samt Impulskörpern in einem entsprechenden Bauraum einer Laufschaufelanordnung befestigt wird.

Aufgabe der Erfindung ist es, ein Impulsköpermodul mit darin aufgenommen Impulskörpern bereitzustellen, das einfach hergestellt werden kann und eine einfache Struktur aufweist. Erfindungsgemäß wird ein Impulskörpermodul vorgeschlagen, umfassend ein einstückig ausgebildetes Aufnahmebauteil mit einer Basis und an der Basis umlaufend angeordneten Seitenwänden, wobei die Seitenwände und die Basis einen Aufnahmeraum begrenzen, ein einstückig ausgebildetes Einsatzbauteil, das in den Aufnahmeraum des Aufnahmebauteils eingesetzt ist, wobei das Aufnahmebauteil und das darin aufgenommen Einsatzbauteil derart ausgebildet sind, dass sie gemeinsam mehrere voneinander getrennte Hohlräume begrenzen, und wobei in jedem Hohlraum ein Impulskörper, insbesondere eine Kugel, aufgenommen ist, und ein einstückig ausgebildetes Verschlussbauteil, das materialschlüssig mit dem Aufnahmebauteil verbunden ist, derart dass der Aufnahmeraum verschlossen ist und das Einsatzbauteil vom Aufnahmebauteil und dem Verschlussbauteil umgeben ist. Der Begriff "einstückig ausgebildetes Verschlussbauteil" soll dabei auch den Fall umfassen, dass das Verschlussbauteil generativ auf dem Einsatzbauteil und/oder dem Aufnahmebauteil aufgebaut wird und somit bereits bei seiner Entstehung stoffschlüssig damit verbunden ist.

Der vorgeschlagene Aufbau eines Impulskörpermoduls ermöglicht die Herstellung von zwei jeweils einstückigen Bauteilen, die miteinander verbunden bzw. ineinander gesetzt werden, so dass mehrere Hohlräume gebildet sind, in denen Impulskörper aufgenommen sind. Durch das materialschlüssige Verbinden des Verschlussbauteils mit dem Aufnahmebauteil entsteht eine geschlossene Box, in der das Einsatzbauteil und die Impulskörper sicher aufgenommen sind. Da das Verschlussbauteil materialschlüssig mit dem Aufnahmebauteil verbunden ist, kann auch von einer einstückigen Box gesprochen werden, in der das Einsatzbauteil und die Impulskörper aufgenommen wird. Ein derart aufgebautes Impulskörpermodul kann variabel in eine entsprechende Vertiefung an einer Schaufelanordnung einer Verdichterstufe oder einer Turbinenstufe einer Gasturbine eingesetzt werden. Dabei weist eine solche Vertiefung bevorzugt eine Innenkontur auf, die im Wesentlichen komplementär zur Außenkontur des Impulskörpermoduls ausgebildet ist.

Das Einsatzbauteil kann eine Abschlusswand aufweisen, die im eingesetzten Zustand des Einsatzbauteils im Aufnahmebauteil den Aufnahmeraum abschließt. Dabei kann die Abschlusswand mit ihrer vom Aufnahmeraum abgewandten Außenseite im Wesentlichen bündig abschließen mit wenigstens einer Stirnseite der umgebenden Seitenwände des Aufnahmebauteils. Somit bilden die Abschlusswand, insbesondere deren Außenseite und die Stirnseite bzw. die Stirnseiten der Seitenwände im Wesentlichen eine gemeinsame durchgehende Ebene. Auf die Stirnseite(n) der Seitenwände und die Außenseite der Stirnwände kann das Verschlusselement angeordnet werden.

Die Abschlusswand kann an ihrer dem Aufnahmeraum zugwandten Innenseite mehrere Streben, insbesondere Längsstreben und Querstreben, aufweisen, die von der Innenseite vorstehen. Diese Streben bilden im eingesetzten Zustand Trennwände, um die mehreren Hohlräume zu begrenzen.

Die Basis und die Seitenwände des Aufnahmebauteils können auf ihren dem Aufnahmeraum zugewandten Innenflächen im Wesentlichen eben ausgebildet sein.

Ferner kann das Einsatzbauteil mehrere Längsstreben und Querstreben aufweisen, die eine gitterartige Struktur bilden, wobei die Längsstreben und die Querstreben zusammen mit wenigstens einer der Innenflächen der Basis oder der Seitenwände die mehreren Hohlräume zumindest abschnittsweise begrenzen.

Alternativ kann die Basis an ihrer dem Aufnahmeraum zugewandten Innenfläche mehrere in den Aufnahmeraum vorstehende Streben, insbesondere Längsstreben und Querstreben aufweisen, derart dass durch die Streben und die Innenfläche der Basis ein Teilvolumen der mehreren Hohlräume gebildet ist.

Dabei können die Streben des Einsatzbauteils und die Streben des Aufnahmebauteils so ausgebildet sind, dass im eingesetzten Zustand des Einsatzbauteils Stirnseiten der Streben des Einsatzbauteils und Stirnseiten der Streben des Aufnahmebauteils aneinander anliegen, derart, dass durch die Streben des Einsatzbauteils, die Streben des Aufnahmebauteils, die Innenfläche der Basis und die Innenseite der Abschlusswand die mehreren Hohlräume begrenzt sind.

Ferner kann das Verschlussbauteil materialschlüssig mit der Abschlusswand des Einsatzbauteils verbunden sein.

Bei einem solchen Impulskörpermodul können das Aufnahmebauteil, das Einsatzbauteil und das Verschlussbauteil durch ein generatives Verfahren hergestellt sind, insbesondere durch ein selektives Laserschmelzverfahren.

Alternativ oder ergänzend kann auch daran gedacht werden, dass das Aufnahmebauteil oder/und das Einsatzbauteil oder/und das Verschlussbauteil wenigstens teilweise durch ein abtragendes Fertigungsverfahren, wie beispielsweise elektrochemisches Abtragen, oder durch ein Metallpulverspritzgussverfahren hergestellt ist. Ein abtragendes Verfahren kann gegebenenfalls auch ergänzend oder im Anschluss an ein generatives Verfahren zum Einsatz kommen, etwa zum Glätten der Außenkontur des Impulskörpermoduls.

Gemäß einem weiteren Aspekt betrifft die Erfindung auch ein Verfahren zu Herstellung eines Impulskörpermoduls für eine Strömungsmaschine, insbesondere für eine Turbinenstufe einer Gasturbine, umfassend die Schritte:
Herstellen eines Aufnahmebauteils durch schichtweises Aufbauen mittels eines generativen Herstellungsverfahrens, insbesondere mittels eines selektiven Laserschmelzverfahrens, wobei das Aufnahmebauteil eine Basis und an der Basis umlaufend angeordnete Seitenwände aufweist, wobei die Seitenwände ausgehend von der Basis derart aufgebaut werden, dass innerhalb der Seitenwände ein Aufnahmeraum gebildet wird;

Herstellen eines wenigstens abschnittsweise gitterartigen Einsatzbauteils durch schichtweises Aufbauen mittels eines generativen Herstellungsverfahrens, insbesondere mittels eines selektiven Laserschmelzverfahrens;

Einsetzen des Einsatzbauteils in den Aufnahmeraum des Aufnahmebauteils, wobei vor dem Einsetzen oder beim Einsetzen Impulskörper, insbesondere Kugeln, in Hohlräume eingesetzt werden, die gemeinsam durch das Aufnahmebauteil und das Einsatzbauteil gebildet werden;

Schichtweises Aufbauen auf dem Aufnahmebauteil mit eingesetzten Einsatzbauteil eines Verschlussbauteils mittels eines generativen Herstellungsverfahrens, insbesondere mittels eines selektiven Laserschmelzverfahrens, so dass das Aufnahmebauteil und das Verschlussbauteil materialschlüssig miteinander verbunden sind und eine einstückige Umhüllung für das Einsatzbauteil und die aufgenommenen Impulskörper bilden.

Die Erfindung betrifft auch eine Laufschaufelanordnung einer Verdichterstufe oder einer Turbinenstufe einer Gasturbine, wobei die Laufschaufelanordnung eine Vertiefung aufweist, in die ein oben beschriebenes Impulskörpermodul eingesetzt ist, wobei die Vertiefung vorzugsweise in einem Laufschaufelfussbereich vorgesehen ist. Dabei wird unter einer Laufschaufelanordnung eine einzelne Laufschaufel oder eine Laufschaufelsegment mit mehreren Laufschaufeln verstanden.

Schließlich betrifft die Erfindung auch eine Gasturbine, insbesondere Fluggasturbine, umfassend mehrere Verdichterstufen und mehrere Turbinenstufen, wobei sie wenigstens ein oben beschriebenes Impulskörpermodul aufweist, das einer Verdichterstufe oder einer Turbinenstufe zugeordnet ist. Dabei können mehrere Impulskörpermodule einem Rotorbauteil, insbesondere einem Laufschaufelkranz, einer Verdichterstufe oder einer Turbinenstufe zugeordnet sein, wobei vorzugsweise ein einzelnes Impulskörpermodul einer einzelnen Laufschaufelanordnung des Laufschaufelkranzes zugeordnet ist.

Nachfolgend wird die Erfindung unter Bezugnahme auf die anliegenden Figuren beispielhaft und nicht einschränkend beschrieben.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.
Fig. 1 zeigt eine erste Ausführungsform eines Aufnahmebauteils eines Impulskörpermoduls in einer perspektivischen Ansicht (Fig. 1A) und einer Draufsicht (Fig. 1B).
Fig. 2 zeigt eine erste Ausführungsform eines Einsatzbauteils für das Aufnahmebauteil der Fig. 1 in einer perspektivischen Darstellung.
Fig. 3 zeigt das Aufnahmebauteil der Fig. 1 mit eingesetztem Einsatzbautel der Fig. 2 in einer perspektivischen Darstellung.
Fig. 4 zeigt das mittels eines Verschlussbauteils geschlossene Aufnahmebauteil.
Fig. 5 zeigt eine zweite Ausführungsform eines Aufnahmebauteils eines Impulskörpermoduls in einer perspektivischen Darstellung.
Fig. 6 zeigt eine zweite Ausführungsform eines Einsatzbauteils für das Aufnahmebauteil der Fig. 1 in einer Draufsicht.
Fig. 7 zeigt eine Schnittdarstellung des Impulskörpermoduls der zweiten Ausführungsform mit daran angebrachtem Verschlussbauteil.
Fig. 8 zeigt das Impulskörpermodul der zweiten Ausführungsform in einer perspektivischen Darstellung von außen.
Fig. 9 zeigt eine dritte Ausführungsform eines Impulskörpermoduls in einer zur Fig. 7 ähnlichen Schnittdarstellung.
Fig. 10 zeigt eine vierte Ausführungsform eines Impulskörpermoduls in einer zur Fig. 7 bzw. 9 ähnlichen Schnittdarstellung.

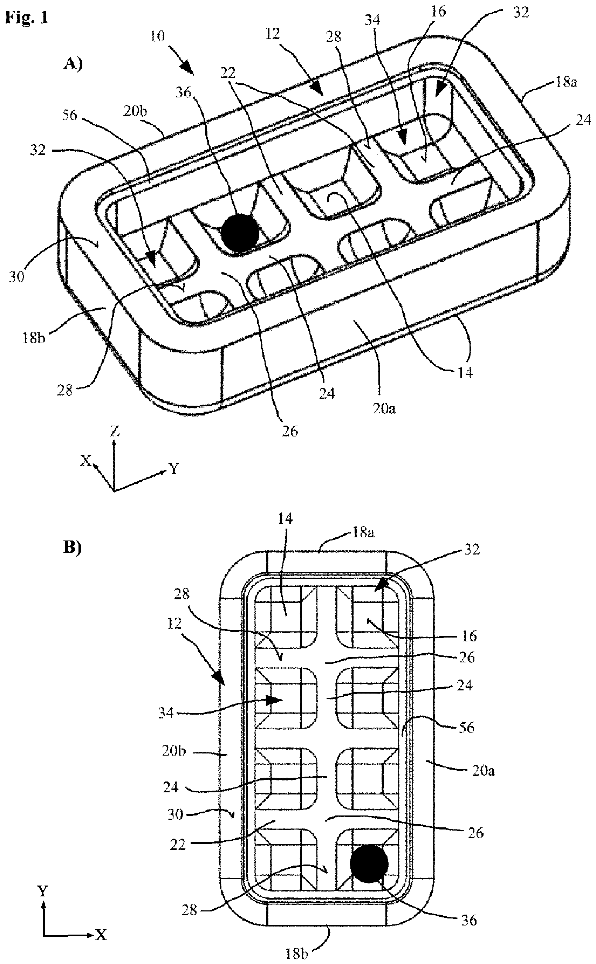

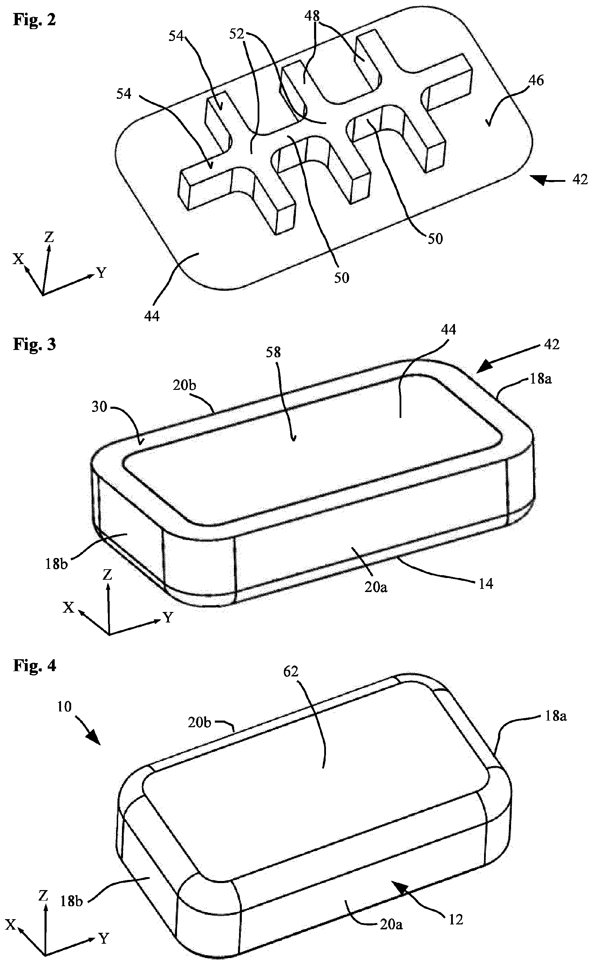

Eine erste Ausführungsform eines Impulskörpermoduls wird unter Bezugnahme auf die Figuren 1 bis 4 beschrieben. Die nachfolgenden Ausführungen unter Bezugnahme auf die Fig. 1A gelten auch für die Fig. 1B. Fig. 1A zeigt in einer perspektivischen Darstellung ein Aufnahmebauteil 12 eines Impulskörpermoduls 10, das in seinem gebrauchsfertigen Zustand in Fig. 4 dargestellt ist. Das Aufnahmebauteil 12 ist einstückig ausgebildet und weist eine Basis 14 auf, die man auch als Boden bezeichnen kann. Die Basis 14 weist eine sichtbare Innenfläche 16 auf und eine in den Figuren 1 bis 4 nicht sichtbare Außenfläche. Mit der Basis 14 sind Seitenwände 18a, 18b und 20a, 20b verbunden. Die Seitenwände 20a, 20b können als Längswände bezeichnet werden und die Seitenwände 18a, 18b können als Querwände bezeichnet werden. In der Draufsicht weist das Aufnahmebauteil 12 eine im Wesentlichen rechteckige Form auf, wobei die Ecken abgerundet oder abgeschrägt ausgebildet sein können. Für die Fig. 1 und alle weiteren Figuren wird das in Fig. 1 dargestellte Koordinatensystem verwendet, bei dem die X-Richtung der Querrichtung entspricht, die Y-Richtung der Längsrichtung entspricht und die Z-Richtung (orthogonal zur X- und Y-Richtung) einer Höhenrichtung entspricht. Dieses Koordinatensystem gilt sinngemäß auch für alle weiteren Figuren.

An der Basis 14 sind mehrere Streben 22, 24 vorgesehen, die von der Innenfläche 16 nach oben vorstehen, was in Fig. 2 einer orthogonalen Richtung zur Zeichnungsebene entspricht. Die Streben 22, 24 können auch als Rippen bezeichnet werden. Die Streben 24 verlaufen in Längsrichtung und können entsprechend auch als Längsstreben bezeichnet werden. Die Streben 22 verlaufen in Querrichtung und können entsprechend auch als Querstreben bezeichnet werden. Die Längsstreben 24 und die Querstreben 22 kreuzen sich in mehreren Kreuzungsbereichen 26. In der Fig. 2 blickt man auf die jeweiligen Stirnflächen 28 der Längsstreben 22 und der Querstreben 24. Die Stirnflächen 28 liegen auf einer Höhe bzw. einem Niveau, das tiefer liegt als der sichtbare stirnseitige Rand 30 der Seitenwände 18a, 18b, 20a, 20b. Die Basis 14 und die Seitenwände 18a, 18b, 20a, 20b begrenzen einen Aufnahmeraum 32. Durch die Längsstreben 24 und die Querstreben 22 sind im Aufnahmeraum 32 mehrere Hohlräume 34 bzw. Teilvolumen von Hohlräumen 34 gebildet. Durch die Längsstreben 24 und die Querstreben werden also zusammen mit der Basis 14 und den Seitenflächen 18a, 18b, 20a, 20b einzelne Kompartimente bzw. Teilkompartimente gebildet. Die Hohlräume 34 dienen der Aufnahme von einem jeweiligen Impulskörper 36, der insbesondere als Kugel ausgebildet sein kann. In den Fig. 1A und 1B ist jeweils beispielhaft nur ein Impulskörper 36 in einem Hohlraum 34 gezeigt. Tatsächlich weist das fertige Bauteil jedoch in jedem der in diesem Ausführungsbeispiel acht Hohlräume 34 jeweils einen Impulskörper, vorzugsweise in Form einer Kugel, auf.

Fig. 2 zeigt in einer perspektivischen Darstellung ein einstückig ausgebildetes Einsatzbauteil 42, das in das Aufnahmebauteil 12, insbesondere in dessen Aufnahmeraum 32 eingesetzt werden kann bzw. im gebrauchsfertigen Zustand eingesetzt ist. Das Einsatzbauteil weist in der ersten Ausführungsform eine Abschlusswand 44 auf. In der Fig. 2 blickt man auf die Innenseite 46 des Abschlusswand 44, wobei diese Innenseite 46 im zusammengesetzten Zustand der Innenfläche 16 der Basis 14 zugewandt ist. Das Einsatzbauteil 42 weist ebenfalls mehrere Streben 48, 50 auf, die an der Abschlusswand 44 angeordnet sind. Die Streben 48 bilden Querstreben und die Streben 50 bilden Längsstreben. Die Längsstreben 50 und die Querstreben 48 kreuzen sich in Kreuzungsbereichen 52. Die Längsstreben 50 und die Querstreben 48 weisen eine Stirnseite 54 auf. Wird das Einsatzbauteil 42 in das Aufnahmebauteil 12 (Fig. 1) eingesetzt, liegen die jeweiligen Stirnseiten 54 auf den Stirnflächen 28 auf. Hierdurch werden die in Fig. 1 dargestellten Hohlräume 34 geschlossen. Ein einzelner Hohlraum 34 wird dann durch die Basis 14, die Streben 22, 24 und die Seitenwände 18a, 18b, 20a, 20b des Aufnahmebauteils sowie durch die Abschlusswand 44 und die Streben 48, 50 des Einsatzbauteils 42 begrenzt. Die Abschlusswand 42 liegt dabei mit ihrer Innenseite 46 auf einem umlaufend angeordneten Innenrand 56 des Aufnahmebauteils 12 auf. Ferner weist die Abschlusswand 44 eine Umfangskontur auf, die komplementär zum Innenumfang der Aufnahmeöffnung 32 ausgebildet ist. Anders ausgedrückt wird der Aufnahmeraum 32 durch das Einsetzen des Einsatzbauteils 42 in das Aufnahmebauteil 12 formschlüssig abgedeckt bzw. verschlossen, so dass in den Hohlräumen 34 aufgenommene Impulskörper 36 sich nur noch innerhalb ihres jeweiligen Hohlraums 34 bewegen können.

Fig. 3 zeigt in einer perspektivischen Darstellung den Zustand, wenn das Einsatzbauteil 42 in das Aufnahmebauteil 12 eingesetzt ist. Aus dieser Darstellung ist ferner ersichtlich, dass eine Außenfläche 58 der Abschlusswand 44 im Wesentlichen bündig abschließt mit dem stirnseitigen Rand 30 der umlaufenden Seitenwände 18a, 18b, 20a, 20b. In diesem Zustand bilden der stirnseitige Rand 30 und die Abschlusswand 44 eine im Wesentlichen durchgehende Ebene bzw. Fläche.

Fig. 4 zeigt in einer perspektivischen Darstellung das fertige Impulskörpermodul 10, wobei das Aufnahmebauteil 12 mit dem eingesetzten Einsatzbauteil 42 (siehe Fig. 3) und den in den Hohlräumen 34 (Fig. 1) aufgenommenen Impulskörpern 36 (Fig. 1) durch ein Verschlussbauteil 62 verschlossen ist. Das Verschlussbauteil 62 kann auch als Deckel bezeichnet werden. Das Verschlussbauteil 62 ist zumindest mit den Seitenwänden 18a, 18b, 20a, 20b des Aufnahmebauteils 12 materialschlüssig verbunden. Es kann aber zusätzlich auch mit der Abschlusswand 44 (Fig. 3) des Einsatzbauteils 42 materialschlüssig verbunden sein.

Die in den Fig. 1 bis 4 vorgestellte erste Ausführungsform eines Impulskörpermoduls 10 mit den jeweils einstückigen Komponenten Aufnahmebauteil 12, Einsatzbauteil 42 und Verschlussbauteil 62 wird bevorzugt mittels eines generativen Herstellungsverfahrens, insbesondere eines selektiven Laserschmelzverfahrens hergestellt. Dabei erfolgt das schichtweise Aufbauen des Aufnahmebauteils 12 beginnend mit einer ersten Schicht der Basis 14 in Höhenrichtung bzw. Z-Richtung (Fig. 1). Das Einsatzstück 42 wird schichtweise aufgebaut ausgehend von einer ersten Schicht der Abschlusswand 44 in Höhenrichtung bzw. Z-Richtung (Fig. 2). Beim Einsetzen des einstückigen Einsatzbauteils 42 in die Aufnahmeöffnung 32 des Aufnahmebauteils 12 werden in die jeweiligen Hohlräume 34 die Impulskörper 36 eingesetzt. Ausgehend von einem Zustand gemäß Fig. 3, wird auf dem noch nicht ganz fertiggestellten Impulskörpermodul 10 mittels des generativen Verfahrens, insbesondere selektivem Laserschmelzverfahren, schichtweise das Verschlussbauteil 62 hergestellt. Dabei wird eine erste Pulverschicht auf die durch den stirnseitigen Rand 30 und die Außenseite 58 der Abschlusswand 44 gebildete durchgängige Fläche bzw. Ebene (Fig. 3) aufgebracht und dann materialschlüssig verbunden. Das so hergestellte Impulskörpermodul 10 weist somit eine einfach herstellbare und spannungsfrei geschlossene Struktur auf. Insbesondere treten auch keine unerwünschten Spannungen auf, wie dies bei konventionellen etwa durch Formschlussverbindung (Rastverbindung o.ä.) eingesetzte Deckel auftreten kann. Da für alle drei Komponenten, nämlich Aufnahmebauteil 12, Einsatzbauteil 42 und Verschlussbauteil 62 das gleiche Material verwendet wird und das gleiche Herstellungsverfahren eingesetzt wird, ergibt sich ein homogen aufgebautes Impulskörpermodul, bei dem die einzelnen Komponenten über gleiche (Material-)Eigenschaften verfügen.

Durch diese Art der Herstellung des erfindungsgemäßen Impulskörpermoduls 10 kann sichergestellt werden, dass die Impulskörper 36 luftdicht in ihren Hohlräumen 34 eingeschlossen sind und von außen kein Gas an sie herandringen kann. Dies insbesondere dann von besonderer Bedeutung, wenn das Impulskörpermodul 10 im Heißgasbereich der Strömungsmaschine, also zum Beispiel an einer Schaufelanordnung im Turbinenbereich der Strömungsmaschine verwendet werden soll. Durch das luftdichte Verschließen der Impulskörper 36 in den Hohlräumen 34 werden diese vor Verschleiß durch Heißgasoxidation und/oder Sulfidation geschützt.

Weiterhin erlaubt die zuvor beschriebene Herstellungsroute die Herstellung großer Stückzahlen zu geringen Kosten. Die Impulskörpermodule 10 sind verhältnismäßig klein. So beträgt die Abmessung ihrer längsten Seite, also die Seite in Längsrichtung bzw. Y-Richtung, in der Praxis je nach Anwendungsgebiet höchstens wenige Zentimeter, vorzugsweise weniger als zwei Zentimeter, stärker bevorzugt zwischen einem und 1,5 Zentimeter. Der Bauraum einer handelsüblichen SLM-Maschine bietet somit in der Regel ausreichend Platz, um mehrere Hundert Aufnahmebauteile 12 und mehrere Hundert Einsatzstücke 42 parallel herstellen zu können.

Bevorzugte Materialien für die Herstellung der Aufnahmebauteile 12, der Einsatzbauteile 42 und der Verschlussbauteil 62 können sein: Haynes 230, Inco 718, Hastelloy X, MARM 247, MARM 247 LLDS, MARM 509. Neben diesen bevorzugten Materialien können auch andere für generative Fertigungsverfahren geeignete Materialien verwendet werden.

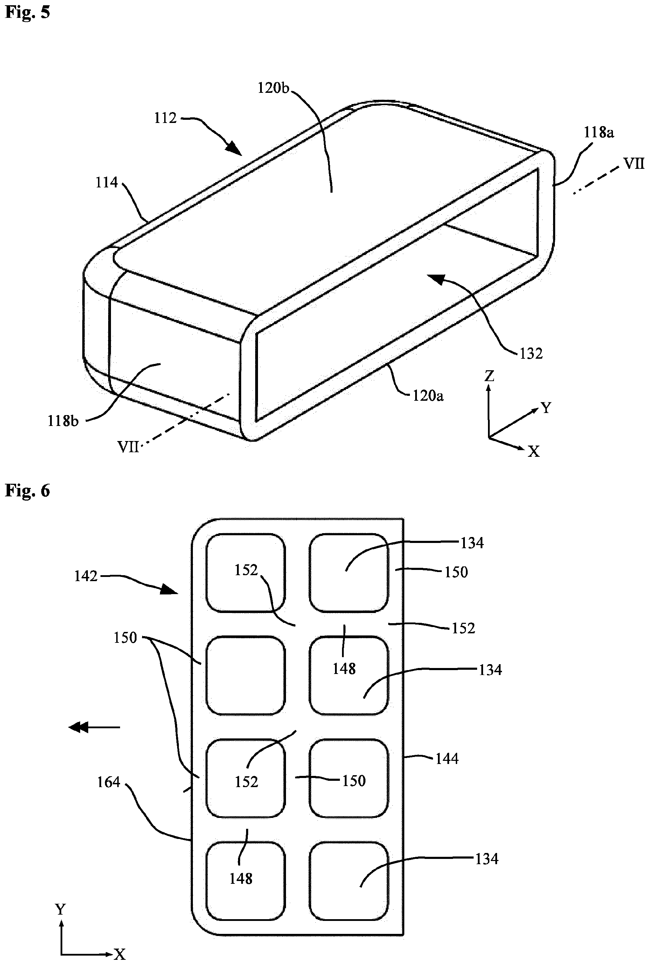

Eine zweite Ausführungsform eines Impulskörpermoduls 110 wird unter Bezugnahme auf die Figuren 5 bis 8 nachfolgend beschrieben. Fig. 5 zeigt eine perspektivische Darstellung des Aufnahmebauteils 112. Auch dieses Aufnahmebauteil 112 umfasst eine Basis 114 und Seitenwände 118a, 118b, 120a, 120b, die mit der Basis 114 verbunden sind. Die Basis 114 und die Seitenwände 118a, 118b, 120a, 120b begrenzen den Aufnahmeraum 132. Die Basis 114 ist auf ihrer in der Fig. 5 nicht sichtbaren Innenseite, die dem Aufnahmeraum 132 zugewandt ist, im Wesentlichen eben bzw. flach ausgeführt. Sie hat im Gegensatz zur Ausführungsform der Fig. 1 bis 4 keine Streben oder Rippen.

Fig. 6 zeigt in einer Draufsicht ein Einsatzbauteil 142, das in den Aufnahmeraum 132 des Aufnahmebauteils 112 (Fig. 5) eingesetzt bzw. eingeschoben werden kann (entsprechend der Richtung des Doppelpfeils). Das Einsatzbauteil 142 umfasst mehrere Streben 148, 150. Dabei können die Streben 148 als Querstreben bezeichnet werden und die Streben 150 können als Längsstreben bezeichnet werden. Die Längsstreben 150 und die Querstreben 148 kreuzen sich in Kreuzungsbereichen 152. Die Streben 148, 150 begrenzen jeweilige Öffnungen bzw. Hohlräume 134. Anders ausgedrückt kann auch davon gesprochen werden, dass das Einsatzbauteil 142 gitterartig ausgebildet ist bzw. ein Gitter mit mehrere Öffnungen bzw. Hohlräumen 134 ist. Die in der Fig. 6 auf der linken Seite miteinander verbundenen Längsstreben 150 bilden eine durchgehende Stützfläche 164, die im eingesetzten Zustand des Einsatzbauteils 142 im Aufnahmebauteil 112 auf der Innenfläche der Basis 114 aufliegt. Die in der Fig. 6 auf der rechten Seite miteinander verbundenen Längsstreben 150 bilden eine durchgehende Abschlusswand 144.

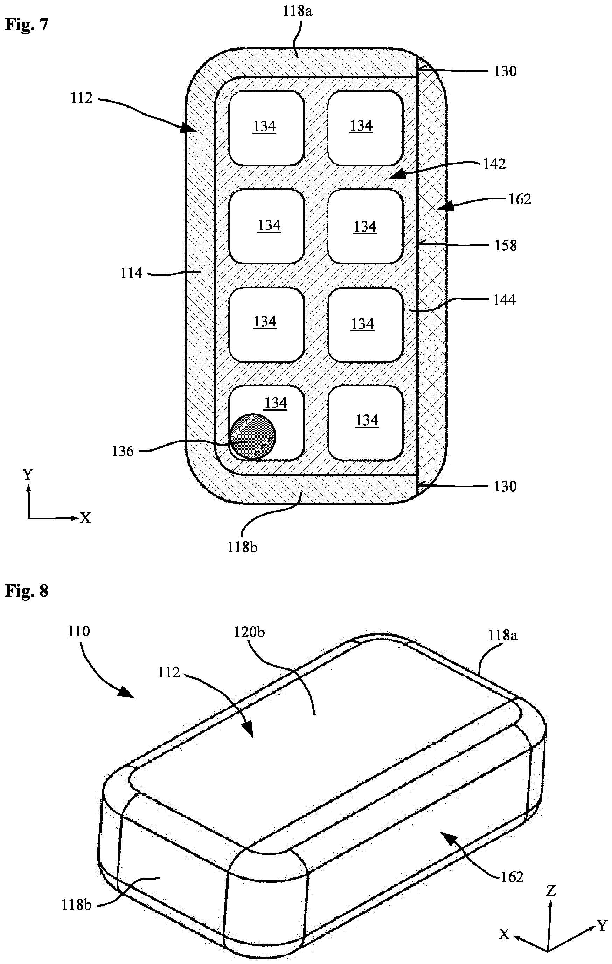

Fig. 7 zeigt in einer Schnittdarstellung entsprechend etwa einer Schnittlinie VII-VII der Fig. 5 den zusammengesetzten Zustand des Impulskörpermodules 110. Im Aufnahmebauteil 112 ist das Einsatzbauteil 142 eingesetzt. Durch das Einsetzen des Einsatzbauteils 142 werden die Hohlräume 134 durch die jeweiligen Innenseiten der Seitenwände 120a und 120b begrenzt, so dass jeder Hohlraum 134 für sich geschlossen ist. In jedem Hohlraum ist ein Impulskörper 136 eingesetzt, vorzugsweise in Form einer Kugel, wobei in der Fig. 7 beispielhaft nur eine Kugel 136 im Hohlraum 134 links unten dargestellt ist. Aus dieser Darstellung ist ferner ersichtlich, dass eine Außenfläche 158 der Abschlusswand 144 im Wesentlichen bündig abschließt mit dem stirnseitigen Rand 130 der umlaufenden Seitenwände 118a, 118b (in Schnittdarstellung sichtbar) und 120a, 120b (in Schnittdarstellung nicht sichtbar). In diesem Zustand bilden der stirnseitige Rand 130 und die Abschlusswand 144 eine im Wesentlichen durchgehende Ebene bzw. Fläche.

Aus den Fig. 7 und 8 ist ersichtlich, dass das Aufnahmebauteil 112 durch ein Abschlussbauteil 162 verschlossen wird. Das Verschlussbauteil 162 kann auch als Deckel bezeichnet werden. Das Verschlussbauteil 162 ist zumindest mit den Seitenwänden 118a, 118b, 120a (nicht sichtbar), 120b des Aufnahmebauteils 12 materialschlüssig verbunden. Es kann aber zusätzlich auch mit der Abschlusswand 144 des Einsatzbauteils 142 materialschlüssig verbunden sein.

Die in den Fig. 5 bis 8 vorgestellte zweite Ausführungsform eines Impulskörpermoduls 110 mit den jeweils einstückigen Komponenten Aufnahmebauteil 112, Einsatzbauteil 142 und Verschlussbauteil 162 wird bevorzugt mittels eines generativen Herstellungsverfahrens, insbesondere einem selektiven Laserschmelzverfahren hergestellt. Dabei erfolgt das schichtweise Aufbauen des Aufnahmebauteils 112 beginnend mit einer ersten Schicht der Basis 114 in Querrichtung bzw. X-Richtung (Fig. 5, Fig. 7). Das Einsatzstück 142 wird schichtweise aufgebaut ausgehend von einer ersten Schicht in Höhenrichtung bzw. Z-Richtung (Fig. 5, Fig. 6). Beim Einsetzen des einstückigen Einsatzbauteils 142 in die Aufnahmeöffnung 132 des Aufnahmebauteils 112 werden in die jeweiligen Hohlräume 134 die Impulskörper 136 eingesetzt. Ausgehend von einem Zustand, in dem das Einsatzbauteil 142 in das Aufnahmebauteil 112 eingesetzt ist, wird dann auf dem noch nicht ganz fertiggestellten Impulskörpermodul 110 mittels des generativen Verfahrens, insbesondere selektivem Laserschmelzverfahren, schichtweise das Verschlussbauteil 162 hergestellt. Dabei wird eine erste Pulverschicht auf die durch den stirnseitigen Rand 130 und die Außenseite 158 der Abschlusswand 144 gebildete durchgängige Fläche bzw. Ebene (Fig. 7) aufgebracht und dann materialschlüssig verbunden. Das so hergestellte Impulskörpermodul 110 weist somit eine einfach herstellbare und spannungsfrei geschlossene Struktur auf. Insbesondere treten auch keine unerwünschten Spannungen auf, wie dies bei konventionellen etwa durch Formschlussverbindung (Rastverbindung o.ä.) eingesetzte Deckel auftreten kann. Da für alle drei Komponenten, nämlich Aufnahmebauteil 112, Einsatzbauteil 142 und Verschlussbauteil 162 das gleiche Material verwendet wird und das gleiche Herstellungsverfahren eingesetzt wird, ergibt sich ein homogen aufgebautes Impulskörpermodul, bei dem die einzelnen Komponenten über gleiche (Material-)Eigenschaften verfügen.

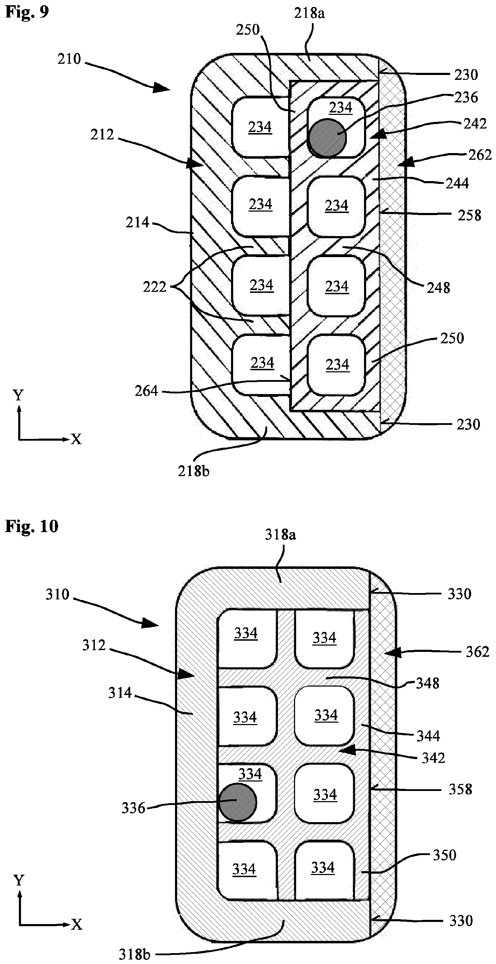

Fig. 9 zeigt in einer zur Fig. 7 ähnlichen Schnittdarstellung eine dritte Ausführungsform eines Impulskörpermoduls 210. Hier sind an der Basis 214 Querstreben 228 ausgebildet, so dass durch die Basis 214 und diese Querstreben 228 Teilvolumina von Hohlräumen 234 begrenz werden. Das Einsatzbauteil 242 weist die bekannten Längsstreben 250 und Querstreben 248 auf. Die in Fig. 9 auf der linken Seite befindlichen Längsstreben 250 bilden eine durchgehende Stützfläche 264, die sich auf den Querstreben 228 des Aufnahmebauteils 212 abstützen. Das Einsatzbauteil 242 kann auch so beschrieben werden, dass etwa einem halbierten Einsatzbauteil 142 der zweiten Ausführungsform (Fig. 6, rechte Hälfte) entspricht. Die auf der rechten Seite in Fig. 9 dargestellten Längsstreben 250 bilden eine durchgehende Abschlusswand 244. Die in der Fig. 9 linken vier Hohlräumen 234 werden jeweils begrenzt von der Basis 214 und den Querstreben 222 des Aufnahmebauteils 212 sowie von der durchgehenden Stützfläche 264 des Einsatzbauteils 242. Die rechten vier Hohlräume 234 sind Teil des Einsatzbauteils 242 und werden durch dessen Querstreben 248 und Längsstreben 250 begrenzt.

Aus dieser Darstellung ist ferner ersichtlich, dass eine Außenfläche 258 der Abschlusswand 244 im Wesentlichen bündig abschließt mit dem stirnseitigen Rand 230 der umlaufenden Seitenwände 218a, 218b (in Schnittdarstellung sichtbar). In diesem Zustand bilden der stirnseitige Rand 230 und die Abschlusswand 244 eine im Wesentlichen durchgehende Ebene bzw. Fläche.

Aus der Fig. 9 ist ersichtlich, dass das Aufnahmebauteil 212 durch ein Abschlussbauteil 262 verschlossen wird. Das Verschlussbauteil 262 kann auch als Deckel bezeichnet werden. Das Verschlussbauteil 262 ist zumindest mit den Seitenwänden 218a, 218b (und den weiteren nicht dargestellten Seitenwänden analog zu den vorherigen Ausführungsformen) des Aufnahmebauteils 212 materialschlüssig verbunden. Es kann aber zusätzlich auch mit der Abschlusswand 244 des Einsatzbauteils 242 materialschlüssig verbunden sein.

Fig. 10 zeigt in einer zur Fig. 9 ähnlichen Schnittdarstellung eine vierte Ausführungsform eines Impulskörpermoduls 310. Hier sind an der Basis 314 keine Querstreben oder Längsstreben ausgebildet. Das Einsatzbauteil 342 weist die bekannten Längsstreben 350 und Querstreben 348 auf. Die linken drei Querstreben stützen sich mit ihren freien Enden bzw. Stirnseiten an der Basis 314 des Aufnahmebauteils 312 ab. Die auf der rechten Seite in Fig. 10 dargestellten Längsstreben 350 bilden eine durchgehende Abschlusswand 344. Die in der Fig. 10 linken vier Hohlräumen 334 werden jeweils begrenzt von der Basis 314, und teilweise den Seitenwänden 318a, 318b des Aufnahmebauteils 212 sowie von Querstreben 348 und Längsstreben 350 des Einsatzbauteils 342. Die rechten vier Hohlräume 334 werden begrenzt durch Querstreben 348 und Längsstreben 350 des Einsatzbauteils 342 und teilweise von den Seitenwänden 318a, 318b des Aufnahmebauteils 312.

Aus dieser Darstellung ist ferner ersichtlich, dass eine Außenfläche 358 der Abschlusswand 344 im Wesentlichen bündig abschließt mit dem stirnseitigen Rand 330 der umlaufenden Seitenwände 318a, 318b (in Schnittdarstellung sichtbar). In diesem Zustand bilden der stirnseitige Rand 330 und die Abschlusswand 344 eine im Wesentlichen durchgehende Ebene bzw. Fläche.

Aus der Fig. 10 ist ersichtlich, dass das Aufnahmebauteil 312 durch ein Abschlussbauteil 362 verschlossen wird. Das Verschlussbauteil 362 kann auch als Deckel bezeichnet werden. Das Verschlussbauteil 362 ist zumindest mit den Seitenwänden 318a, 318b (und den weiteren nicht dargestellten Seitenwänden analog zu den vorherigen Ausführungsformen) des Aufnahmebauteils 312 materialschlüssig verbunden. Es kann aber zusätzlich auch mit der Abschlusswand 344 des Einsatzbauteils 342 materialschlüssig verbunden sein.

Für die dritte und vierte Ausführungsform gilt hinsichtlich der Herstellung mittels eines generativen Verfahrens das Gleiche wie für die unter Bezugnahme auf die Fig. 5 bis 8 beschriebene zweite Ausführungsform. Es wird diesbezüglich auch die entsprechende Beschreibung oben verwiesen, wobei in Gedanken einfach die Bezugszeichen mit einer führenden "1" durch diejenigen mit einer führenden "2" oder "3" ersetzt werden können in Zusammenschaue mit den Fig. 9 und 10.

Die hier vorgestellten Impulskörpermodule 10, 110, 210, 310 können als Schwingungsdämpfer in Komponenten einer Strömungsmaschine, insbesondere in Laufschaufelanordnungen einer Gasturbine verwendet werden. Eine Laufschaufelanordnung kann zu diesem Zweck eine Vertiefung aufweisen, in der ein Impulskörpermodul 10, 110, 210, 310 eingeführt und befestigt werden kann. Die Vertiefung kann dabei insbesondere im Wesentlichen komplementär zu einer Außenkontur des Impulskörpermoduls 10, 2110, 210, 310 ausgebildet sind. Hierdurch kann auch eine Art formschlüssige Verbindung zwischen Impulskörpermodul 10, 110, 210, 310 und der Komponente der Strömungsmaschine, insbesondere der Laufschaufelanordnung erreicht werden. Als Laufschaufelanordnung wird dabei eine einzelne Laufschaufel oder eine zusammengefasste Gruppe von Laufschaufeln verstanden. Ein Impulskörpermodul 10, 110, 210, 310 kann dabei insbesondere in einem Fußbereich einer Laufschaufelanordnung vorgesehen sein. Die hier vorgestellten aus einstückig hergestellten Komponenten hergestellten Impulskörpermodule können einfach hergestellt werden und ermöglichen eine einfache Handhabung beim Anbringen an einer Laufschaufelanordnung. Auch ein Austausch von solchen Impulskörpermodulen, etwa im Rahmen von Wartungsarbeiten, ist sehr einfach durchführbar. Insgesamt ergibt sich als ein einfach herstellbares und gut handhabbares Impulskörpermodul für die (Stoß-)Schwingungsdämpfung in einer Gasturbine.

### Bezugszeichenliste

- 10, 110, 210, 310: Impulskörpermodul
- 12, 112, 212, 312: Aufnahmebauteil
- 14, 114, 214, 314: Basis
- 16: Innenfläche
- 18a, 118a, 218a, 318a: Seitenwand
- 18b, 118b, 218b, 318b: Seitenwand
- 20a, 120a: Seitenwand
- 20b, 120b: Seitenwand
- 22, 222: Querstrebe
- 24: Längsstrebe
- 26: Kreuzungsbereich
- 28: Stirnfläche
- 30, 130, 230, 330: stirnseitiger Rand
- 32, 132, 232, 332: Aufnahmeraum
- 34, 134, 234, 334: Hohlraum
- 36, 136, 236, 336: Impulskörper
- 42, 142, 242, 342: Einsatzbauteil
- 44, 144, 244, 344: Abschlusswand
- 46, 146, 246, 326: Innenseite
- 48, 148, 248, 348: Querstrebe
- 50, 150, 250, 350: Längsstrebe
- 52, 152: Kreuzungsbereich
- 54: Stirnseite
- 56: Innenrand
- 58, 158, 258, 358: Außenfläche
- 62, 162, 262,362: Verschlussbauteil

## Patentansprüche

1. Impulskörpermodul (10; 110; 210; 310) für eine Strömungsmaschine, insbesondere eine Turbinenstufe einer Gasturbine, umfassend
ein einstückig ausgebildetes Aufnahmebauteil (12; 112; 212; 312) mit einer Basis (14; 114; 214; 314) und an der Basis umlaufend angeordneten Seitenwänden (18a, 18b, 20a, 20b; 118a, 118b, 120a, 120b; 218a, 218b; 318a, 318b), wobei die Seitenwände und die Basis einen Aufnahmeraum (32; 132) begrenzen,
ein einstückig ausgebildetes Einsatzbauteil (42; 142; 242; 342) das in den Aufnahmeraum (32; 132) des Aufnahmebauteils (12; 112; 212; 312) eingesetzt ist, wobei das Aufnahmebauteil (12; 112; 212; 312) und das darin aufgenommen Einsatzbauteil (42; 142; 242; 342) derart ausgebildet sind, dass sie gemeinsam mehrere voneinander getrennte Hohlräume (34; 134; 234; 334) begrenzen, und wobei in jedem Hohlraum (34; 134; 234; 334) ein Impulskörper (36; 136; 236; 336), insbesondere eine Kugel, aufgenommen ist, und
ein einstückig ausgebildetes Verschlussbauteil (62; 162; 262; 362), das materialschlüssig mit dem Aufnahmebauteil (12; 112; 212; 312) verbunden ist, derart dass der Aufnahmeraum (32; 132) verschlossen ist und das Einsatzbauteil (42; 142; 242; 342) vom Aufnahmebauteil (12; 112; 212; 312) und dem Verschlussbauteil (62; 162; 262; 362) umgeben ist.

2. Impulskörpermodul nach Anspruch 1, wobei das Einsatzbauteil (42; 142; 242; 342) eine Abschlusswand (44; 144; 244; 344) aufweist, die im eingesetzten Zustand des Einsatzbauteils (42; 142; 242; 342) im Aufnahmebauteil (12; 112; 212; 312) den Aufnahmeraum (32; 132) abschließt.

3. Impulskörpermodul nach Anspruch 2, wobei die Abschlusswand (44; 144; 244; 344) mit ihrer vom Aufnahmeraum (32; 132) abgewandten Außenseite (58; 158; 258; 358) im Wesentlichen bündig abschließt mit wenigstens einer Stirnseite (30; 130; 230; 330) der umgebenden Seitenwände (18a, 18b, 20a, 20b; 118a, 118b, 120a, 120b; 218a, 218b; 318a, 318b) des Aufnahmebauteils (12; 112; 212; 312).

4. Impulskörpermodul nach Anspruch 2 oder 3, wobei die Abschlusswand (44; 144; 244; 344) an ihrer dem Aufnahmeraum (32; 132) zugwandten Innenseite mehrere Streben (48, 50; 148, 150; 248, 250; 348, 350), insbesondere Längsstreben und Querstreben, aufweist, die von der Innenseite vorstehen.

5. Impulskörpermodul nach einem der Ansprüche 1 bis 4, wobei die Basis (114; 314) und die Seitenwände (118a, 118b, 120a, 120b; 318a, 318b) des Aufnahmebauteils auf ihren dem Aufnahmeraum (32) zugewandten Innenflächen im Wesentlichen eben ausgebildet sind.

6. Impulskörpermodul nach Anspruch 5, wobei das Einsatzbauteil (142; 342) mehrere Längsstreben und Querstreben (148, 150; 348, 350) aufweist, die eine gitterartige Struktur bilden, wobei die Längsstreben und die Querstreben (148, 150; 348, 350) zusammen mit wenigstens einer der Innenflächen der Basis (114; 314) oder der Seitenwände (118a, 118b, 120a, 120b; 318a, 318b) die mehreren Hohlräume 134; 334) zumindest abschnittsweise begrenzen.

7. Impulskörpermodul nach einem der Ansprüche 1 bis 4, wobei die Basis (14; 214) an ihrer dem Aufnahmeraum (32) zugewandten Innenfläche (16) mehrere in den Aufnahmeraum (32) vorstehende Streben (22, 24; 222), insbesondere Längsstreben und Querstreben aufweist, derart dass durch die Streben (22, 24; 222) und die Innenfläche (16) der Basis (14; 214) ein Teilvolumen der mehreren Hohlräume (34; 234) gebildet ist.

8. Impulskörpermodul nach Anspruch 7, wobei die Streben (48, 50) des Einsatzbauteils (42) und die Streben (22, 24) des Aufnahmebauteils (42) so ausgebildet sind, dass im eingesetzten Zustand des Einsatzbauteils (42) Stirnseiten (28) der Streben (48, 50) des Einsatzbauteils (42) und Stirnseiten (54) der Streben (48, 50) des Aufnahmebauteils (12) aneinander anliegen, derart, dass durch die Streben (22, 24) des Einsatzbauteils (42), die Streben (48. 50) des Aufnahmebauteils (12), die Innenfläche der Basis (14) und die Innenseite der Abschlusswand (44) die mehreren Hohlräume (34) begrenzt sind.

9. Impulskörpermodul nach einem der Ansprüche 2 bis 8, wobei das Verschlussbauteil (62; 162; 262; 362) materialschlüssig mit der Abschlusswand (44; 144; 244; 344) des Einsatzbauteils (42; 142; 242; 342) verbunden ist.

10. Impulskörpermodul nach einem der vorhergehenden Ansprüche, **dadurch gekennzeichnet, dass** das Aufnahmebauteil (12; 112; 212; 312), das Einsatzbauteil (42; 142; 242; 342) und das Verschlussbauteil (62; 162; 262; 362) durch ein generatives Verfahren hergestellt sind, insbesondere durch ein selektives Laserschmelzverfahren.

11. Impulskörpermodul nach einem der Ansprüche 1 bis 9, **dadurch gekennzeichnet, dass** das Aufnahmebauteil oder/und das Einsatzbauteil oder/und das Verschlussbauteil wenigstens teilweise durch ein abtragendes Fertigungsverfahren, wie beispielsweise elektrochemisches Abtragen, oder durch ein Metallpulverspritzgussverfahren hergestellt ist.

12. Verfahren zu Herstellung eines Impulskörpermoduls für eine Strömungsmaschine, insbesondere eine Turbinenstufe einer Gasturbine, umfassend die Schritte:
Herstellen eines Aufnahmebauteils durch schichtweises Aufbauen mittels eines generativen Herstellungsverfahrens, insbesondere mittels eines selektiven Laserschmelzverfahrens, wobei das Aufnahmebauteil eine Basis und an der Basis umlaufend angeordnete Seitenwände aufweist, wobei die Seitenwände ausgehend von der Basis derart aufgebaut werden, dass innerhalb der Seitenwände ein Aufnahmeraum gebildet wird;
Herstellen eines wenigstens abschnittsweise gitterartigen Einsatzbauteils durch schichtweises Aufbauen mittels eines generativen Herstellungsverfahrens, insbesondere mittels eines selektiven Laserschmelzverfahrens;
Einsetzen des Einsatzbauteils in den Aufnahmeraum des Aufnahmebauteils, wobei vor dem Einsetzen oder beim Einsetzen Impulskörper, insbesondere Kugeln, in Hohlräume eingesetzt werden, die gemeinsam durch das Aufnahmebauteil und das Einsatzbauteil gebildet werden;
Schichtweises Aufbauen auf dem Aufnahmebauteil mit eingesetztem Einsatzbauteil eines Verschlussbauteils mittels eines generativen Herstellungsverfahrens, insbesondere mittels eines selektiven Laserschmelzverfahrens, so dass das Aufnahmebauteil und das Verschlussbauteil materialschlüssig miteinander verbunden sind und eine einstückige Umhüllung für das Einsatzbauteil und die aufgenommenen Impulskörper bilden.

13. Laufschaufelanordnung einer Verdichterstufe oder einer Turbinenstufe einer Gasturbine, **dadurch gekennzeichnet, dass** die Laufschaufelanordnung eine Vertiefung aufweist, in die ein Impulskörpermodul nach einem der Ansprüche 1 bis 11 eingesetzt ist, wobei die Vertiefung vorzugsweise in einem Laufschaufelfussbereich vorgesehen ist.

14. Gasturbine, insbesondere Fluggasturbine, umfassend mehrere Verdichterstufen und mehrere Turbinenstufen, **dadurch gekennzeichnet, dass** sie wenigstens ein Impulskörpermodul nach einem der Ansprüche 1 bis 11 aufweist, das einer Verdichterstufe oder einer Turbinenstufe zugeordnet ist.

15. Gasturbine nach Anspruch 14, **dadurch gekennzeichnet, dass** mehrere Impulskörpermodule einem Rotorbauteil, insbesondere einem Laufschaufelkranz, einer Verdichterstufe oder einer Turbinenstufe zugeordnet sind, wobei vorzugsweise ein einzelnes Impulskörpermodul einer einzelnen Laufschaufelanordnung des Laufschaufelkranzes zugeordnet ist.

## Claims

1. Impulse body module (10; 110; 210; 310) for a turbomachine, in particular a turbine stage of a gas turbine, comprising
a single-piece receiving component (12; 112; 212; 312) comprising a base (14; 114; 214; 314) and side walls (18a, 18b, 20a, 20b; 118a, 118b, 120a, 120b; 218a, 218b; 318a, 318b) arranged on the periphery of the base, wherein the side walls and the base define a receiving space (32; 132),
a single-piece insertion component (42; 142; 242; 342) which is inserted into the receiving space (32; 132) of the receiving component (12; 112; 212; 312), wherein the receiving component (12; 112; 212; 312) and the insertion component (42; 142; 242; 342) received therein are designed such that they jointly define a plurality of cavities (34; 134; 234; 334) that are separate from one another, and wherein an impulse body (36; 136; 236; 336), in particular a ball, is received in each cavity (34; 134; 234; 334), and
a single-piece closure component (62; 162; 262; 362) which is integrally joined to the receiving component (12; 112; 212; 312) such that the receiving space (32; 132) is closed and the insertion component (42; 142; 242; 342) is surrounded by the receiving component (12; 112; 212; 312) and the closure component (62; 162; 262; 362).

2. Impulse body module according to claim 1, wherein the insertion component (42; 142; 242; 342) has a sealing wall (44; 144; 244; 344) which seals the receiving space (32; 132) when the insertion component (42; 142; 242; 342) is inserted in the receiving component (12; 112; 212; 312).

3. Impulse body module according to claim 2, wherein the outer face (58; 158; 258; 358) of the sealing wall (44; 144; 244; 344) that is remote from the receiving space (32; 132) is substantially flush with at least one end face (30; 130; 230; 330) of the surrounding side walls (18a, 18b, 20a, 20b; 118a, 118b, 120a, 120b; 218a, 218b; 318a, 318b) of the receiving component (12; 112; 212; 312).

4. Impulse body module according to either claim 2 or claim 3, wherein the sealing wall (44; 144; 244; 344) has, on the inner face thereof which faces the receiving space (32; 132), a plurality of struts (48, 50; 148, 150; 248, 250; 348, 350), in particular longitudinal struts and transverse struts, which protrude from the inner face.

5. Impulse body module according to any of claims 1 to 4, wherein the base (114; 314) and the side walls (118a, 118b, 120a, 120b; 318a, 318b) of the receiving component are substantially planar on the inner surfaces thereof that face the receiving space (32).

6. Impulse body module according to claim 5, wherein the insertion component (142; 342) comprises a plurality of longitudinal struts and transverse struts (148, 150; 348, 350) which form a grid-like structure, wherein the longitudinal struts and the transverse struts (148, 150; 348, 350) define, together with at least one of the inner surfaces of the base (114; 314) or of the side walls (118a, 118b, 120a, 120b; 318a, 318b), the plurality of cavities (134; 334) at least in portions.

7. Impulse body module according to any of claims 1 to 4, wherein the base (14; 214) comprises, on the inner surface (16) thereof that faces the receiving space (32), a plurality of struts (22, 24; 222), in particular longitudinal struts and transverse struts, which protrude into the receiving space (32), such that a subspace in the plurality of cavities (34; 234) is formed by the struts (22, 24; 222) and the inner surface (16) of the base (14; 214).

8. Impulse body module according to claim 7, wherein the struts (48, 50) of the insertion component (42) and the struts (22, 24) of the receiving component (42) are designed such that end faces (28) of the struts (48, 50) of the insertion component (42) and end faces (54) of the struts (48, 50) of the receiving component (12) abut one another when the insertion component (42) is inserted, such that the plurality of cavities (34) are delimited by the struts (22, 24) of the insertion component (42), the struts (48, 50) of the receiving component (12), the inner surface of the base (14) and the inner face of the sealing wall (44).

9. Impulse body module according to any of claims 2 to 8, wherein the closure component (62; 162; 262; 362) is integrally joined to the sealing wall (44; 144; 244; 344) of the insertion component (42; 142; 242; 342).

10. Impulse body module according to any of the preceding claims, **characterized in that** the receiving component (12; 112; 212; 312), the insertion component (42; 142; 242; 342) and the closure component (62; 162; 262; 362) are produced by means of a generative method, in particular by means of a selective laser melting method.

11. Impulse body module according to any of claims 1 to 9, **characterized in that** the receiving component and/or the insertion component and/or the closure component is produced at least in part by a material-removing method, such as electrochemical machining, or by means of a metal powder injection molding method.

12. Method for producing an impulse body module for a turbomachine, in particular a turbine stage of a gas turbine, comprising the steps of:
producing a receiving component by building it up layer by layer using a generative production method, in particular using a selective laser melting method, wherein the receiving component comprises a base and side walls arranged on the periphery of the base, wherein the side walls are constructed, proceeding from the base, such that a receiving space is formed within the side walls;
producing an insertion component that is grid-like at least in portions by building it up layer by layer using a generative production method, in particular using a selective laser melting method;
inserting the insertion component into the receiving space of the receiving component, wherein, before or during insertion, impulse bodies, in particular balls, are inserted into cavities that are jointly formed by the receiving component and the insertion component;
building up layer by layer a closure component on the receiving component comprising the inserted insertion component using a generative production method, in particular using a selective laser melting method, such that the receiving component and the closure component are integrally joined and form a single-piece casing for the insertion component and the received impulse bodies.

13. Rotor blade assembly of a compressor stage or a turbine stage of a gas turbine, **characterized in that** the rotor blade assembly has a recess into which an impulse body module according to any of claims 1 to 11 is inserted, the recess preferably being provided in a rotor blade root region.

14. Gas turbine, in particular an aircraft gas turbine, comprising a plurality of compressor stages and a plurality of turbine stages, **characterized in that** it has at least one impulse body module according to any of claims 1 to 11 which is associated with a compressor stage or a turbine stage.

15. Gas turbine according to claim 14, **characterized in that** a plurality of impulse body modules are associated with a rotor component, in particular a rotor blade ring, a compressor stage or a turbine stage, an individual impulse body module preferably being associated with an individual rotor blade assembly of the rotor blade ring.

## Revendications

1. Module de corps d'impulsions (10 ; 110 ; 210 ; 310) destiné à une turbomachine, en particulier un étage de turbine d'une turbine à gaz, comprenant
un élément structurel de réception (12 ; 112 ; 212 ; 312) formé d'une seule pièce et comportant une base (14 ; 114 ; 214 ; 314) et des parois latérales (18a, 18b, 20a, 20b ; 118a, 118b, 120a, 120b ; 218a, 218b, 318a, 318b) disposées circonférentiellement sur la base, les parois latérales et la base délimitant un espace de réception (32 ; 132),
un élément structurel d'insertion (42 ; 142 ; 242 ; 342) formé d'une seule pièce qui est inséré dans l'espace de réception (32 ; 132) de l'élément structurel de réception (12 ; 112 ; 212 ; 312), l'élément structurel de réception (12 ; 112 ; 212 ; 312) et l'élément structurel d'insertion (42 ; 142 ; 242 ; 342) logé à l'intérieur de ce dernier étant conçus de façon à délimiter conjointement une pluralité de cavités (34 ; 134 ; 234 ; 334) séparées les unes des autres, et un corps d'impulsion (36 ; 136 ; 236 ; 336), en particulier un sphère, étant reçu dans chaque cavité (34 ; 134 ; 234 ; 334) et
un élément structurel de fermeture (62 ; 162 ; 262 ; 362) formé d'une seule pièce qui est relié par liaison de matière à l'élément structurel de réception (12, 112 ; 212 ; 312) de telle sorte que l'espace de réception (32 ; 132) soit fermé et que l'élément structurel d'insertion (42 ; 142 ; 242 ; 342) soit entouré par l'élément structurel de réception (12 ; 112 ; 212 ; 312) et l'élément structurel de fermeture (62 ; 162 ; 262 ; 362).

2. Module de corps d'impulsions selon la revendication 1, dans lequel l'élément structurel d'insertion (42 ; 142 ; 242 ; 342) comporte une paroi de fermeture (44 ; 144 ; 244 ; 344) qui ferme l'espace de réception (32 ; 132) lorsque l'élément structurel d'insertion (42 ; 142 ; 242 ; 342) est inséré dans l'élément structurel de réception (12 ; 112 ; 212 ; 312).

3. Module de corps d'impulsions selon la revendication 2, dans lequel la paroi de fermeture (44 ; 144 ; 244 ; 344) effectue la fermeture avec son côté extérieur (58 ; 158 ; 258 ; 358), opposé à l'espace de réception (32 ; 132), sensiblement à fleur d'au moins un côté frontal (30 ; 130 ; 230 ; 330) des parois latérales formant pourtour (18a, 18b, 20a, 20b ; 118a, 118b, 120a, 120b ; 218a, 218b ; 318a, 318b) de l'élément structurel de réception (12 ; 112 ; 212 ; 312).

4. Module de corps d'impulsions selon la revendication 2 ou 3, dans lequel la paroi de fermeture (44 ; 144 ; 244 ; 344) comporte, sur son côté intérieur tourné vers l'espace de réception (32 ; 132), une pluralité d'entretoises (48, 50 ; 148, 150 ; 248, 250 ; 348, 350), en particulier d'entretoises longitudinales et d'entretoises transversales qui font saillie depuis le côté intérieur.

5. Module de corps d'impulsions selon l'une des revendications 1 à 4, dans lequel la base (114 ; 314) et les parois latérales (118a, 118b, 120a, 120b ; 318a, 318b) de l'élément structurel de réception sont formés de manière sensiblement plane sur leurs surfaces intérieures tournées vers l'espace de réception (32).

6. Module de corps d'impulsions selon la revendication 5, dans lequel l'élément structurel d'insertion (142 ; 342) comporte une pluralité d'entretoises longitudinales et d'entretoises transversales (148, 150 ; 348, 350) qui forment une structure en treillis, les entretoises longitudinales et les entretoises transversales (148, 150 ; 348, 350) délimitant au moins par endroits, conjointement avec au moins l'une des surfaces intérieures de la base (114 ; 314) ou des parois latérales (118a, 118b, 120a, 120b ; 318a, 318b), la pluralité de cavités (134 ; 334).

7. Module de corps d'impulsions selon l'une des revendications 1 à 4, dans lequel la base (14 ; 214) comporte, sur sa surface intérieure (16) tournée vers la chambre de réception (32), une pluralité d'entretoises (22, 24 ; 222) faisant saillie dans l'espace de réception (32), en particulier des entretoises longitudinales et des entretoises transversales, de telle sorte que une partie du volume de la pluralité de cavités (34 ; 234) est formée par les entretoises (22, 24 ; 222) et la surface intérieure (16) de la base (14 ; 214).

8. Module de corps d'impulsions selon la revendication 7, dans lequel les entretoises (48, 50) de l'élément structurel d'insertion (42) et les entretoises (22, 24) de l'élément structurel de réception (42) sont formées de telle sorte que, lorsque l'élément structurel d'insertion (42) est inséré, les côtés frontaux (28) des entretoises (48, 50) de l'élément structurel d'insertion (42) et les côtés frontaux (54) des entretoises (48, 50) de l'élément structurel de réception (12) sont en appui les uns sur les autres de telle sorte que la pluralité de cavités (34) soit délimitée par les entretoises (22, 24) de l'élément structurel d'insertion (42), les entretoises (48, 50) de l'élément structurel de réception (12), la surface intérieure de la base (14) et le côté intérieur de la paroi de fermeture (44).

9. Module de corps d'impulsions selon l'une des revendications 2 à 8, dans lequel l'élément structurel de fermeture (62 ; 162 ; 262 ; 362) est relié par liaison de matière à la paroi de fermeture (44 ; 144 ; 244 ; 344) de l'élément structurel d'insertion (42 ; 142 ; 242 ; 342).

10. Module de corps d'impulsions selon l'une des revendications précédentes, **caractérisé en ce que** l'élément structurel de réception (12 ; 112 ; 212 ; 312), l'élément structurel d'insertion (42 ; 142 ; 242 ; 342) et l'élément structurel de fermeture (62 ; 162 ; 262 ; 362) sont fabriqués par un procédé génératif, en particulier par un procédé de fusion sélective par laser.

11. Module de corps d'impulsions selon l'une des revendications 1 à 9, **caractérisé en ce que** l'élément structurel de réception et/ou l'élément structurel d'insertion et/ou l'élément structurel de fermeture sont fabriqués au moins en partie par un procédé de fabrication par enlèvement de matière, comme par exemple l'enlèvement électrochimique de matière, ou par un procédé de moulage par injection de poudre métallique.

12. Procédé de fabrication d'un module de corps d'impulsions destiné à une turbomachine, en particulier un étage de turbine d'une turbine à gaz, le procédé comprenant les étapes suivantes :
fabriquer un élément structurel de réception par construction par couches au moyen d'un procédé de fabrication générative, en particulier au moyen d'un procédé de fusion sélective par laser, l'élément structurel de réception comportant une base et des parois latérales disposées circonférentiellement sur la base, les parois latérales étant construites à partir de la base de manière à former un espace de réception à l'intérieur des parois latérales ;
fabriquer un élément structurel d'insertion, au moins partiellement en forme de treillis, par construction par couches au moyen d'un procédé de fabrication générative, en particulier au moyen d'un procédé de fusion sélective par laser ;
insérer l'élément structurel d'insertion dans l'espace de réception de l'élément structurel de réception, des corps d'impulsions, en particulier des billes, étant insérés avant l'insertion ou pendant l'insertion dans des cavités qui sont formées conjointement par l'élément structurel de réception et l'élément structurel d'insertion ;
construire par couches un élément structurel de fermeture sur l'élément structurel de réception, l'élément structurel d'insertion étant inséré, au moyen d'un procédé de fabrication générative, en particulier au moyen d'un procédé de fusion sélective par laser, de telle sorte que l'élément structurel de réception et l'élément structurel de fermeture soient reliés entre eux par liaison de matière et forment une enveloppe d'un seule pièce destinée à l'élément structurel d'insertion et aux corps d'impulsions reçus.

13. Agencement d'aubes directrices d'un étage de compresseur ou d'un étage de turbine d'une turbine à gaz, **caractérisé en ce que** l'agencement d'aubes directrices comprend un évidement dans lequel un module de corps d'impulsions selon l'une des revendications 1 à 11 est inséré, l'évidement étant prévu de préférence dans une zone de pied d'aube directrice.

14. Turbine à gaz, en particulier turbine à gaz d'aéronef, comprenant une pluralité d'étages de compresseur et une pluralité d'étages de turbine, **caractérisée en ce qu'**elle comprend au moins un module de corps d'impulsions selon l'une des revendications 1 à 11 qui est associé à un étage de compresseur ou un étage de turbine.

15. Turbine à gaz selon la revendication 14, **caractérisée en ce qu'**une pluralité de modules de corps d'impulsions est associée à un élément structurel de rotor, en particulier à une couronne d'aubes directrice, à un étage de compresseur ou à un étage de turbine, de préférence un seul module de corps d'impulsions étant associé à un seul agencement d'aubes directrices de la couronne d'aubes directrices.
